(19) Europäisches Patentamt / European Patent Office / Office européen des brevets

(11) **EP 2 551 981 B1**

(12) **FASCICULE DE BREVET EUROPEEN**

(45) Date de publication et mention de la délivrance du brevet:
**09.04.2014 Bulletin 2014/15**

(51) Int Cl.:
***H02H 5/10*** *(2006.01)*

(21) Numéro de dépôt: **12354041.1**

(22) Date de dépôt: **26.07.2012**

(54) **Dispositif de surveillance d'un conducteur de terre avec mesure de l'impédance**

Anordnung zur Überwachung eines Erdleiters durch Messung der Impedanz

System of monitoring an earth line by measuring the impedance

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2011 FR 1102383**

(43) Date de publication de la demande:
**30.01.2013 Bulletin 2013/05**

(73) Titulaire: **Schneider Electric Industries SAS**
**92500 Rueil-Malmaison (FR)**

(72) Inventeurs:
• **Tian, Simon**
**38320 Eybens (FR)**
• **Vincent, François**
**38570 Le Cheylas (FR)**

(74) Mandataire: **Talbot, Alexandre et al**
**Cabinet Hecké**
**Europole**
**10, rue d'Arménie - BP 1537**
**38025 Grenoble Cedex 1 (FR)**

(56) Documents cités:
**EP-A1- 0 435 405        EP-A1- 1 936 773**
**DE-A1- 3 429 067        GB-A- 2 199 707**
**US-A1- 2003 156 367     US-B1- 7 023 680**

# Description

## Domaine technique de l'invention

L'invention est relative à un dispositif de surveillance d'un conducteur de terre capable de mesurer l'impédance de mise à la terre.

## État de la technique

Le conducteur de terre, appelé également conducteur de protection (« protective earth » en anglais, PE) relie la carcasse métallique d'un équipement électrique à la terre. Il assure ainsi la protection de l'utilisateur et de l'équipement lorsqu'un défaut d'isolement apparaît.

Cette protection est garantie si le conducteur PE est continu entre la carcasse et la terre. En effet, en cas de rupture du conducteur PE, la carcasse peut être portée à un potentiel électrique dangereux pour l'utilisateur.

On distingue plusieurs modes de raccordement à la terre. Selon le schéma de liaison à la terre « TT », la carcasse et le conducteur de neutre N du réseau de distribution sont reliés à des prises de terre distinctes. Selon le schéma « TN », la carcasse et le conducteur de neutre N sont reliés à une prise de terre commune.

La continuité du conducteur PE entre la prise de courant et la charge est généralement vérifiée à l'aide d'un protocole de communication. En cas de rupture du conducteur, la communication est interrompue, ce qui déclenche l'ouverture d'un disjoncteur. La liaison entre le conducteur PE et la terre n'est pas vérifiée en permanence dans les installations électriques. Cette liaison peut être contrôlée empiriquement en mesurant la tension entre le conducteur de neutre N et le conducteur de terre PE. Si la tension N-PE est proche de 0 V, cela signifie que la liaison est assurée.

Par ailleurs, il est important de vérifier que l'impédance du conducteur PE ne dépasse pas une valeur seuil. En effet, l'impédance de mise à la terre est susceptible d'augmenter au cours du temps et représente un risque pour l'utilisateur au-delà d'une certaine valeur.

Le document GB2167618 décrit un circuit de protection électrique muni de moyens de détermination de l'impédance du conducteur PE.

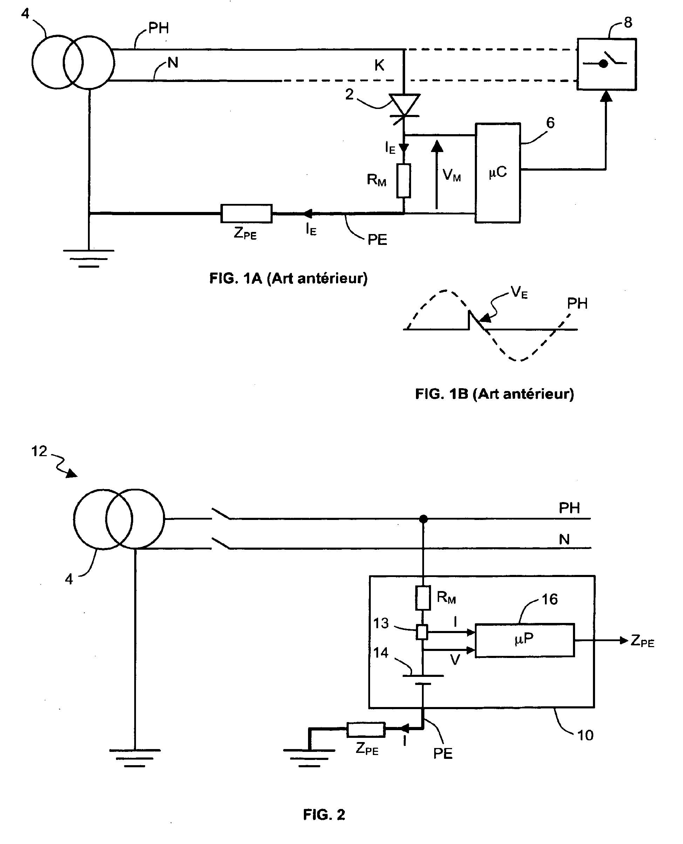

La figure 1A représente une partie du schéma électrique d'un tel circuit de protection. Un thyristor 2 et une résistance de mesure $R_M$ sont connectés en série entre le conducteur de phase PH d'un transformateur 4 et le conducteur de terre PE (représenté en trait plus épais).

L'impédance du conducteur PE, notée $Z_{PE}$ sur la figure 1A, est déterminée en mesurant la tension $V_M$ aux bornes de la résistance $R_M$, lorsqu'un signal d'excitation est injecté dans le conducteur PE. La tension $V_M$ est fournie à un circuit de traitement 6, qui commande l'ouverture d'un disjoncteur à courant résiduel 8 lorsque l'impédance $Z_{PE}$ dépasse 100 $\Omega$.

La figure 1B représente en traits pointillés le signal sur la phase PH du réseau électrique, c'est-à-dire la tension alternative issue du transformateur 4, et en trait plein la tension d'excitation $V_E$ appliquée sur la résistance de mesure $R_M$ pour la détermination de l'impédance $Z_{PE}$.

La tension d'excitation $V_E$ correspond à une portion descendante de la tension PH du réseau, comprise entre 0 V et 10 V. Elle est obtenue en activant le thyristor 2 pendant une courte période (100 $\mu$s), ce qui provoque un courant d'excitation $I_E$ dans la résistance $R_M$ et l'impédance $Z_{PE}$. Le thyristor est commandé par un circuit à retard de phase (non représenté).

Ce circuit de protection utilise donc la phase du réseau comme source d'excitation pour la mesure de l'impédance $Z_{PE}$. La tension d'excitation $V_E$ subit alors des variations brusques, à cause des fluctuations du réseau. Or, cette instabilité est préjudiciable pour la mesure de l'impédance $Z_{PE}$. La tension $V_E$ dépend également de la précision du circuit à retard de phase qui commande le thyristor 2. Un tel circuit de commande est lourd à mettre en oeuvre.

Par ailleurs, le document US2003/156367 décrit un dispositif de protection électrique muni d'un ohmmètre connecté pour mesurer l'impédance de boucle dans le conducteur de neutre et le conducteur de terre d'un circuit d'alimentation. L'ohmmètre dispose de sa propre source de tension et d'une impédance de couplage. L'impédance de boucle mesurée est comparée à un seuil, pour provoquer si besoin un signal d'alerte.

## Résumé de l'invention

L'invention vise un dispositif de surveillance d'un conducteur de terre facile à mettre en oeuvre et permettant une mesure précise de l'impédance du conducteur de terre.

Selon l'invention, on tend vers cet objectif à l'aide d'un dispositif de surveillance d'un conducteur de terre, destiné à être raccordé à un conducteur de phase ou de neutre d'un réseau électrique et comprenant un capteur d'une première grandeur électrique disposé entre le conducteur de phase ou de neutre et le conducteur de terre, un générateur d'une seconde grandeur électrique, distincte de celle du réseau électrique, connecté en série avec le capteur et un circuit de traitement configuré pour calculer l'impédance électrique du conducteur de terre à partir des première et seconde grandeurs électriques choisies parmi une tension et un courant circulant dans le conducteur de terre. Le dispositif comprend en outre un circuit de connexion du générateur au conducteur de phase dans un premier état, au conducteur de neutre dans un deuxième état et de déconnexion du générateur dans un troisième état, et un circuit de reconnaissance du conducteur de neutre configuré pour commander le circuit de connexion dans le deuxième état.

**Description sommaire des dessins**

D'autres avantages et caractéristiques ressortiront plus clairement de la description qui va suivre de modes particuliers de réalisation donnés à titre d'exemples non limitatifs et illustrés à l'aide des dessins annexés, dans lesquels :

- la figure 1A, précédemment décrite, représente un circuit de protection avec mesure de l'impédance du conducteur de terre, selon l'art antérieur ;

- la figure 1B, précédemment décrite, représente des signaux du circuit de protection selon la figure 1A ;

- la figure 2 représente un dispositif de surveillance d'un conducteur de terre, selon un premier mode de réalisation de l'invention;

- la figure 3 représente un deuxième mode de réalisation de dispositif de surveillance selon l'invention ;

- la figure 4 représente un mode de réalisation de limiteur de courant utilisé dans le dispositif de surveillance des figures 2 et 3 ; et

- la figure 5 représente un perfectionnement du dispositif de surveillance des figures 2 et 3.

**Description d'un mode de réalisation préféré de l'invention**

Plutôt que d'utiliser le réseau électrique comme source d'excitation, on prévoit un générateur de tension calibré et stable pour la mesure de l'impédance d'un conducteur de terre. Le générateur est connecté entre le conducteur de terre et un conducteur de phase ou de neutre d'un réseau électrique, de manière à générer un courant d'excitation à travers le conducteur de terre. En mesurant ce courant d'excitation, il est possible de calculer l'impédance du conducteur de terre.

La figure 2 représente un mode de réalisation préférentiel d'un dispositif de surveillance avec mesure de l'impédance du conducteur de terre. A titre d'exemple, ce dispositif de surveillance est destiné à commander un disjoncteur différentiel lorsque l'impédance $Z_{PE}$ dépasse une valeur seuil à cause du vieillissement ou d'une rupture du conducteur de terre.

Le dispositif de surveillance 10 est raccordé au conducteur de terre PE d'une installation électrique et à un réseau de distribution 12 comprenant au moins deux conducteurs actifs

Dans l'exemple de la figure 2, le réseau de distribution 12 est monophasé. Il comporte un conducteur de phase PH et un conducteur de neutre N provenant d'un transformateur 4. Le neutre N et le conducteur PE sont tous deux reliés à la terre et disposent chacun d'une prise de terre. L'installation est donc raccordée à la terre selon le régime « TT ».

Le dispositif 10 comprend un capteur de courant 13 et un générateur de tension 14 connectés en série entre la phase PH et le conducteur PE. Le dispositif 10 et le réseau 12 forment ainsi une boucle PH-PE dans laquelle se propage, en plus du signal du réseau 12, un signal de mesure issu du générateur 14. Ce signal de mesure traverse le capteur 13, le conducteur de phase PH et le conducteur de terre PE.

Dans ce mode de réalisation, le générateur 14 est un générateur de tension continue V, de préférence comprise entre 5 V et 24 V (tension très basse de sécurité). Un courant 1, continu, se superpose donc au courant alternatif issu de la phase PH.

Le capteur de courant 13 mesure le courant continu I qui circule à travers le conducteur PE. Il est, par exemple, formé d'une résistance de précision, d'un capteur à effet Hall, à effet fluxgate, d'un capteur magnéto-résistif...

Avantageusement, le dispositif 10 comprend une impédance de limitation $R_M$ du courant, connectée au conducteur de phase PH en série avec le capteur 13 et le générateur 14. Le limiteur $R_M$ a pour objectifs de supporter les contraintes du réseau 12 (tension 230 V, ondes de choc...) et de limiter le courant continu 1 injecté dans le réseau. Ainsi, on peut brancher directement le circuit de surveillance sur le réseau et le courant 1 traversant le conducteur de protection pendant la mesure d'impédance est limité. Le limiteur $R_M$ est, de préférence, formé d'une résistance de valeur comprise entre 1 kΩ et 50 kΩ.

Un circuit de traitement 16 reçoit en entrée le courant 1 mesuré par le capteur 13 et la tension V imposée par le générateur 14, pour calculer en sortie l'impédance du conducteur PE, $Z_{PE}$. Le circuit 16 est, par exemple, un microprocesseur.

Le calcul de l'impédance $Z_{PE}$ est basé sur la loi d'Ohm. Le rapport de la tension V sur le courant I représente l'impédance totale de la boucle PH1-PE, c'est-à-dire la somme de l'impédance $Z_{PH}$ du conducteur de phase, de la résistance $R_M$ et de l'impédance $Z_{PE}$, soit :

$$\frac{V}{I} = Z_{PH} + R_M + Z_{PE} \qquad (1).$$

Typiquement, l'impédance $Z_{PH}$ du conducteur de phase est largement inférieure à la résistance $R_M$ et à l'impédance $Z_{PE}$. Elle peut donc être négligée, ce qui permet de simplifier la relation (1) de la manière suivante :

$$\frac{V}{I} = R_M + Z_{PE} \qquad (2).$$

La tension continue V et la résistance $R_M$ étant connues, on peut calculer facilement l'impédance $Z_{PE}$ à l'aide de la relation (2), après avoir mesuré le courant 1.

Si l'on veut tenir compte de l'impédance $Z_{PH}$ du conducteur de phase dans le calcul de $Z_{PE}$ (relation 1), on effectuera au préalable une mesure d'impédance dans la boucle PH-N. L'impédance de la boucle PH-N est égale à la somme de l'impédance $Z_{PH}$ du conducteur de phase et de l'impédance $Z_N$ du conducteur de neutre. Or, les impédances $Z_{PH}$ et $Z_N$ sont sensiblement égales. On peut donc calculer une valeur de l'impédance $Z_{PH}$ à partir de l'impédance de la boucle PH-N.

On utilisera, de préférence, le circuit de surveillance 10 pour mesurer l'impédance $Z_N$, en le raccordant aux conducteurs PH et N et en utilisant la même méthode de calcul.

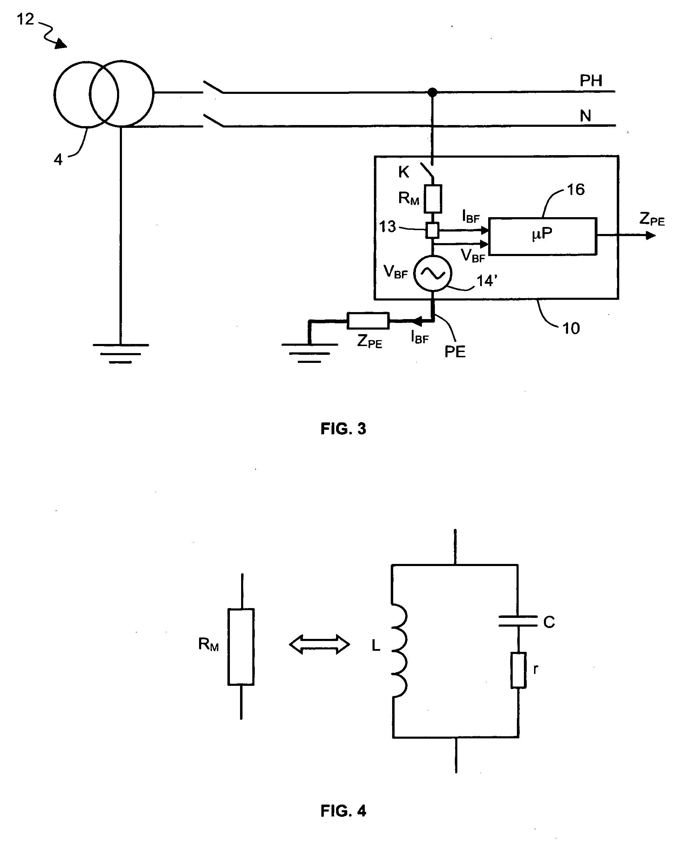

La figure 3 représente un deuxième mode de réalisation de dispositif de surveillance, dans lequel la source de tension continue est remplacée par une source de tension basse fréquence 14'.

Le principe de mesure est similaire à celui décrit en relation avec la figure 2. Au lieu d'utiliser un signal d'excitation continu, on utilise un signal alternatif à une fréquence comprise entre 1 Hz et 20 Hz. L'impédance du conducteur de terre $Z_{PE}$ (à basse fréquence) est calculée à partir de la tension $V_{BF}$ du générateur 14' et du courant $I_{BF}$ mesuré par le capteur de courant 13. L'amplitude du signal basse fréquence est, de préférence, comprise entre 5 V et 24 V.

L'impédance d'un conducteur de terre étant essentiellement résistive, la valeur de $Z_{PE}$ obtenue à basse fréquence est sensiblement identique à celle obtenue grâce au montage de la figure 2.

Avantageusement, un interrupteur K est connecté en série avec le limiteur $R_M$ et le générateur de tension 14 ou 14' (Fig.2 ou 3). Il permet de déconnecter le dispositif de surveillance 10 lorsque la mesure de l'impédance $Z_{PE}$ n'est pas requise. A titre d'exemple, on peut souhaiter réaliser un test d'impédance seulement au début de la mise en fonctionnement de l'équipement.

L'impédance $Z_{PE}$ du conducteur de terre est mesurée à partir de signaux d'excitation, continus dans le mode de réalisation de la figure 2 (1 et V) et à basse fréquence dans le mode de réalisation de la figure 3 ($I_{BF}$ et $V_{BF}$). Le signal d'excitation est donc distinct de la tension du réseau, dans le sens où il possède une fréquence et/ou une amplitude différentes de celles du réseau.

Pour améliorer la précision de mesure, il est préférable d'isoler les signaux d'excitation dans la boucle PH1-PE, en filtrant le signal alternatif du réseau 12, généralement à une fréquence de 50 Hz. Le filtrage peut être réalisé dans le circuit de traitement 16, de façon analogique ou numérique.

Dans un mode de mise en oeuvre, le filtrage de la tension du réseau est réalisé en amont du circuit de traitement 16, par exemple à l'aide d'un filtre passe-bas dont la fréquence de coupure est inférieure à 50 Hz, et supérieure à 2 fois la fréquence d'excitation environ lorsque le générateur 14' est utilisé. Ainsi, le circuit 16 ne tient compte que de la composante continue ou basse fréquence du courant (respectivement I ou $I_{BF}$) pour le calcul de l'impédance $Z_{PE}$.

La figure 4 représente une variante de mise en oeuvre pour éliminer la fréquence du réseau 12. L'impédance de limitation $R_M$ constitue un filtre, par exemple de type coupe bande. Ce filtre comprend, de préférence un condensateur C et une inductance L montées en parallèle (circuit LC parallèle). Les valeurs de L et C sont choisies de manière à obtenir une fréquence de résonance égale de la fréquence du réseau. Une résistance r est, de préférence, connectée en série avec le condensateur C, pour le protéger contre la surtension lorsqu'on connecte le dispositif 10 à la phase PH.

A la fréquence du réseau, l'impédance du circuit LC parallèle est élevée, ce qui permet de ramener le courant de fuite à la terre à une valeur négligeable. En courant continu ou basse fréquence, l'impédance $R_M$ est plutôt faible, ce qui permet d'une part de réduire le signal d'excitation pour la mesure et d'autre part d'obtenir une grande précision de mesure pour les faibles valeurs de $Z_{PE}$.

De tels filtres sont particulièrement simples à mettre en oeuvre, notamment dans le cas de la figure 2. Le filtrage de la tension du réseau améliore la précision de la mesure de l'impédance $Z_{PE}$. En contrepartie, le temps nécessaire à cette mesure est plus important, en particulier lorsque le signal d'excitation est à basse fréquence.

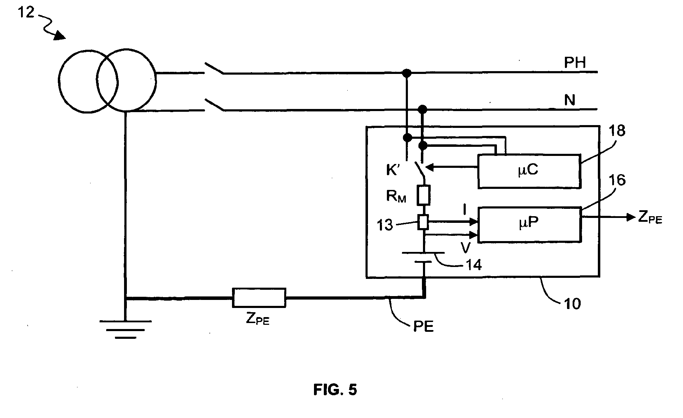

La figure 5 représente une amélioration du dispositif de surveillance visant à réduire les contraintes du réseau sur la mesure de l'impédance $Z_{PE}$. Plutôt que d'injecter le signal d'excitation dans la boucle PH-PE, on connecte le dispositif de surveillance 10 sur le conducteur de neutre N du réseau 12 puis on mesure l'impédance de la boucle N-PE. On s'affranchit ainsi de la tension du réseau et du filtre associé. Dans ce cas, l'impédance $R_M$ peut être réduite à une faible valeur (quelques ohms), voire supprimée.

Dans certains cas, on peut ignorer quel conducteur du réseau 12 est le neutre. Afin de remédier à ce problème, le dispositif 10 comprend avantageusement un circuit 18 de reconnaissance du conducteur de neutre et un circuit de connexion du générateur 14 au conducteur de neutre. Ce circuit de connexion comprend par exemple un relais de connexion K' à trois états.

Dans un premier état du relais K', le générateur 14 est connecté au conducteur de phase PH du réseau 12. Dans un deuxième état, le générateur 14 est connecté au conducteur de neutre N. Le dispositif 10 est déconnecté du réseau 12 dans un troisième état du relais K'.

Le circuit 18 est configuré pour reconnaître le conducteur de neutre N et le conducteur de phase PH du réseau 12. Il comprend deux bornes d'entrée sur lesquelles sont branchés les conducteurs PH et N. La détection du conducteur N s'effectue, de préférence, en mesurant la tension entre l'une des bornes d'entrée et la terre, c'est-à-dire la tension N-PE ou la tension PH-PE (en régime « TT » ou « TN »). A titre d'exemple, en mesurant un potentiel d'environ 0 V à l'une des bornes, on en déduit que le conducteur N est connecté à cette borne. Sur l'autre borne est connecté le conducteur de phase PH et le potentiel vaut 230 V environ.

Une fois le conducteur de neutre N détecté, le circuit 18 commande le relais K' afin qu'il connecte le générateur 14 sur le neutre N.

Ainsi, il n'est plus nécessaire de détecter au préalable le conducteur de neutre, c'est le dispositif de protection qui s'en charge. Le dispositif est connecté simplement aux deux conducteurs, sans se soucier de savoir quel conducteur est le neutre.

Bien qu'ils aient été représentés et décrits séparément, le circuit de traitement 16 et le circuit de commande 18 pourront formés un seul et même circuit électronique.

Dans les modes de réalisation des figures 2-3 et 5, la source d'excitation est un générateur de tension isolé du réseau électrique. Le signal de mesure émis par cette source n'est donc pas sensible aux fluctuations du réseau. L'impédance $Z_{PE}$ du conducteur de terre peut alors être déterminée avec précision.

Les dispositifs de surveillance décrits ci-dessus peuvent être raccordés à une installation électrique reliée à la terre selon le régime « TT » ou selon le régime « TN ». Dans le mode « TN », représenté à la figure 5, le conducteur PE et le conducteur N partagent la même prise de terre.

Le dispositif n'est par contre pas opérationnel en mode « IT », pour lequel le neutre N du transformateur est isolé. En effet, une boucle de courant ne peut être formée dans ce cas, et les signaux d'excitation ne parcourent pas le conducteur PE.

De nombreuses applications du dispositif de surveillance sont envisagées. En particulier, le dispositif pourra être intégré dans des bornes de recharge de véhicules électriques. De telles installations requièrent un haut degré de protection. En effet, il est indispensable d'assurer la sécurité des personnes en vérifiant la bonne mise à la terre du véhicule électrique lors de la charge.

Pour cette application, le mode de réalisation de la figure 2 est particulièrement adapté car la mesure de l'impédance $Z_{PE}$ n'est alors pas sensible aux condensateurs de filtrage du véhicule électrique, disposés entre la phase et le conducteur de terre.

De nombreuses variantes et modifications du dispositif de surveillance apparaîtront à l'homme du métier. Le dispositif a été décrit en relation avec un réseau de distribution monophasé. Il pourrait toutefois être raccordé à un réseau biphasé ou triphasé.

Le calcul de l'impédance $Z_{PE}$ s'appuie sur deux grandeurs physiques, qui sont le courant et la tension dans la boucle PH-PE (ou N-PE). On pourrait donc remplacer le générateur de tension par un générateur de courant, et la mesure du courant par une mesure de tension. La source d'excitation (non parfaite) peut ainsi être quelconque, ce qui facilitera sa réalisation.

**Revendications**

1. Dispositif de surveillance (10) d'un conducteur de terre (PE), destiné à être raccordé à un conducteur de phase (PH) ou de neutre (N) d'un réseau électrique (12) et comprenant :

   - un capteur (13) d'une première grandeur électrique disposé entre le conducteur de phase ou de neutre et le conducteur de terre,
   - un générateur (14, 14') d'une seconde grandeur électrique, distincte de celle du réseau électrique, connecté en série avec le capteur ;
   - un circuit de traitement (16) configuré pour calculer l'impédance électrique ($Z_{PE}$) du conducteur de terre à partir des première et seconde grandeurs électriques choisies parmi une tension (V, $V_{BF}$) et un courant circulant dans le conducteur de terre (I, $I_{BF}$) ;

   **caractérisé en ce qu'**il comporte :

   - un circuit (K') de connexion du générateur (14, 14') au conducteur de phase (PH) dans un premier état, au conducteur de neutre (N) dans un deuxième état et de déconnexion du générateur dans un troisième état ; et
   - un circuit (18) de reconnaissance du conducteur de neutre (N) configuré pour commander le circuit de connexion (K') dans le deuxième état.

2. Dispositif selon la revendication 1, **caractérisé en ce que** la première grandeur électrique est le courant (1, $I_{BF}$) circulant dans le conducteur de terre et la seconde grandeur électrique est une tension de mesure (V, VBF).

3. Dispositif selon la revendication 2, **caractérisé en ce que** le générateur de tension de mesure est un générateur (14) de tension continue (V) comprise entre 5 V et 24 V.

4. Dispositif selon la revendication 2, **caractérisé en ce que** le générateur de tension de mesure est un générateur (14') de tension alternative ($V_{BF}$) à une fréquence comprise entre 1 Hz et 20 Hz.

5. Dispositif selon l'une quelconque des revendications 1 à 4, **caractérisé en ce qu'**il comporte un filtre configuré pour éliminer la tension du réseau électrique.

6. Dispositif selon l'une quelconque des revendications 1 à 5, **caractérisé en ce qu'**il comporte une impédance de limitation ($R_M$) du courant circulant dans le conducteur de terre.

**7.** Dispositif selon la revendication 6, **caractérisé en ce que** l'impédance de limitation ($R_M$) comprend une inductance (L) et un condensateur (C) connectés en parallèle et choisis de manière à obtenir une fréquence de résonance égale à la fréquence de fonctionnement du réseau électrique.

**8.** Dispositif selon l'une quelconque des revendications 1 à 7, **caractérisé en ce que** le circuit de connexion comprend un relais à trois états (K').

## Patentansprüche

**1.** Vorrichtung zur Überwachung (10) eines Erdleiters (PE), die dazu bestimmt ist, mit einem Phasenleiter (PH) oder einem Neutralleiter (N) eines Stromnetzes (12) verbunden zu werden und umfasst:

- einen Aufnehmer (13) für eine erste elektrische Größe, der zwischen dem Phasen- oder dem Neutralleiter und dem Erdleiter angeordnet ist,
- einen Generator (14, 14') einer von derjenigen des Stromnetzes verschiedenen zweiten elektrischen Größe, der mit dem Aufnehmer in Reihe geschaltet ist,
- eine Verarbeitungsschaltung (16), die dazu ausgelegt ist, die elektrische Impedanz ($Z_{PE}$) des Erdleiters anhand der ersten und der zweiten elektrischen Größe, die aus einer Spannung (V, $V_{BF}$) und einem in dem Erdleiter fließenden Strom (I, $I_{BF}$) ausgewählt sind, zu berechnen,

**dadurch gekennzeichnet, dass** sie umfasst:

- eine Schaltung (K') zum Anschließen des Generators (14, 14') an den Phasenleiter (PH) in einem ersten Zustand, an den Neutralleiter (N) in einem zweiten Zustand und zum Trennen des Generators in einem dritten Zustand, sowie
- eine Schaltung (18) zum Erkennen des Neutralteiters (N), die dazu ausgelegt ist, die Anschlussschaltung (K') in dem zweiten Zustand zu steuern.

**2.** Vorrichtung nach Anspruch 1, dadurch gekennzeichuet, dass die erste elektrische Größe der in dem Erdleiter fließende Strom (I, $I_{BF}$) ist und die zweite elektrische Größe eine Messspannung (V, $V_{BF}$) ist.

**3.** Vorrichtung nach Anspruch 2, **dadurch gekennzeichnet, dass** der Messspannungsgenerator ein Generator (14) für Gleichspannung (V) zwischen 5 V und 24 V ist.

**4.** Vorrichtung nach Anspruch 2, **dadurch gekennzeichnet, dass** der Messspannungsgenerator ein Generator (14') für Wechselspannung ($V_{BF}$) mit einer Frequenz zwischen 1 Hz und 20 Hz ist.

**5.** Vorrichtung nach einem der Ansprüche 1 bis 4, **dadurch gekennzeichnet, dass** sie ein Filter umfasst, das dazu ausgelegt ist, die Spannung des Stromnetzes zu beseitigen.

**6.** Vorrichtung nach einem der Ansprüche 1 bis 5, **dadurch gekennzeichnet, dass** sie eine Impedanz zur Begrenzung ($R_M$) des in dem Erdleiter fließenden Stroms umfasst.

**7.** Vorrichtung nach Anspruch 6, **dadurch gekennzeichnet, dass** die Begrenzungsimpedanz ($R_M$) eine Drossel (L) und einen Kondensator (C) umfasst, die parallelgeschaltet und derart gewählt sind, dass eine Resonanzfrequenz, die gleich der Betriebsfrequenz des Stromnetzes ist, erhalten wird.

**8.** Vorrichtung nach einem der Ansprüche 1 bis 7, **dadurch gekennzeichnet, dass** die Anschlussschaltung ein Relais mit drei Zuständen (K') umfasst.

## Claims

**1.** A monitoring device (10) of an earth conductor (PE) designed to be connected to a phase conductor (PH) or a neutral conductor (N) of an electric power system (12) and comprising:

- a sensor (13) of a first electric quantity arranged between the phase or neutral conductor and the earth conductor,
- a generator (14, 14') of a second electric quantity different from that of the electric power system, connected in series with the sensor,
- a processing circuit (16) configured to compute the electric impedance ($Z_{PE}$) of the earth conductor from first and second electric quantities chosen from a voltage (V, $V_{BF}$) and a current flowing in the earth conductor (I, $I_{BF}$),

**characterized in that** it comprises:

- a connection circuit (K') for connecting the generator (14, 14') to the phase conductor (PH) in a first state, to the neutral conductor (N) in a second state, and for disconnecting the generator in a third state; and
- a circuit (18) for recognising the neutral conductor (N) configured to control the connection circuit (K') in the second state.

**2.** The device according to claim 1, **characterized in that** the first electric quantity is the current (I, $I_{BF}$) flowing in the earth conductor and the second electric quantity is a measurement voltage (V, $V_{BF}$).

**3.** The device according to claim 2, **characterized in that** the measurement voltage generator is a generator (14) generating a DC voltage (V) comprised between 5 V and 24 V.

**4.** The device according to claim 2, **characterized in that** the measurement voltage generator is a generator (14') generating an AC voltage ($V_{BF}$) at a frequency comprised between 1 Hz and 20 Hz.

**5.** The device according to any one of claims 1 to 4, **characterized in that** it comprises a filter configured to eliminate the electric power system voltage

**6.** The device according to any one of claims 1 to 5, **characterized in that** it comprises a limiting impedance ($R_M$) of the current flowing in the earth conductor.

**7.** The device according to claim 6, **characterized in that** the limiting impedance ($R_M$) comprises an inductance (L) and a capacitor (C) connected in parallel and chosen such as to obtain a resonance frequency equal to the operating frequency of the power system.

**8.** The device according to any one of claims 1 to 7, **characterized in that** the connection circuit comprises a three-state relay (K').

**FIG. 1A (Art antérieur)**

**FIG. 1B (Art antérieur)**

**FIG. 2**

FIG. 3

FIG. 4

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2167618 A
- US 2003156367 A